# EUROPÄISCHE PATENTANMELDUNG

(11) **EP 0 732 155 A1**
(43) Veröffentlichungstag der Anmeldung: **18.09.1996**
(21) Anmeldenummer: 96102539.2
(22) Anmeldetag: 20.02.1996
(51) Int. Cl.: B08B 9/02, B23G 9/00

(54) **Zwangsgeführte Bürsten einer tragbaren Gewinde-Reinigungseinrichtung**

(30) Priorität: 20.02.1995 DE 29502785 U
(71) Anmelder: UNIGRIND GmbH, 52224 Stolberg (DE)
(72) Erfinder: Freymann, Wilfried, 52224 Stolberg (DE)
(74) Vertreter: Leonhard, Frank Reimund, Dipl.-Ing.

(57) **Zusammenfassung**

Die Erfindung geht von der Aufgabe aus, daß die Reinigungseffizienz verbessert wird, auch wenn verschiedene Drehzahlen der Reinigungseinrichtung gewünscht werden und stark unterschiedliche Durchmesser von Reinigungsgewinden vorliegen. Erreicht wird das mit umfänglich orientierten Federn 1a,1a',1a'';2a,2a';3a,3b, deren Einstellung unabhängig von der Drehzahl des Antriebsorgans und von der Arbeitslage des Gerätes ist.

## Beschreibung

Das technische Gebiet ist definiert im Oberbegriff des Anspruchs 1. Zum Reinigen von Außengewinden (Bolzen etc.) wird in **DE-U 93 13 722** durch radiales Verdrehen des Außenrohres mit seinen eingefrästen Stellnocken gegenüber dem Bürstenträger eine bestimmte Stellung für die Reinigungsbürsten **vorgewählt**, die zu einem ganz bestimmten Gewinde**kern**durchmesser gehört. Diese Stellung können die in Ruhestellung lose in den Führungsschlitzen des Bürstenträgers liegenden Bürsten nur dann einnehmen, wenn der Antrieb der Reinigungseinrichtung so **schnell** läuft, daß genügend große **Fliehkräfte** auf die Bürsten wirken und sich diese damit radial nach außen gegen die Stellnocken schieben. Das Reinigungsgerät muß zu seiner Funktionstüchtigkeit eine bestimmte Umfangsgeschwindigkeit haben, wobei die Unfallgefahr - insbesondere bei längeren, verlängerten und größeren Geräten (mehr Masse) - erheblich ist und die allgemeinen UVV-Bestimmungen und das Maschinenschutzgesetz den Einsatz des Gerätes einschränken. Reinigungsgeräte für größere Gewindedurchmesser können zudem wegen ihrer größeren Dimension und größerem Gewicht bei höheren Anfangsdrehzahlen nicht mehr sicher gehalten und achsgenau an den zu reinigenden Bolzen herangeführt werden. Die Folge ist frühzeitiger Bürstenverschleiß bei ungenügendem Reinigungseffekt.

Um einen guten Reinigungseffekt bei ausreichender Standzeit der Bürsten zu erzielen, müssen alle Bürsten des Bürstenhalters den gleichen Mittenabstand haben, also "zentrisch" eingestellt sein. Nur dann haben alle Bürsten den gleichen Anpreßdruck auf den zu reinigenden Gewindeschaft. Vorraussetzung für das Reinigen von Gewinden ist ein gleichmäßiger und leichter Anpreßdruck der Bürsten, da nur die Drahtspitzen die tatsächliche Reinigungsarbeit leisten.

Erhöhter und ungleichmäßiger Anpreßdruck der Bürstenleisten verbessert **nicht** das Reinigungsergebnis, sondern setzt nur die Lebensdauer (Standzeit) der Bürsten herab, was auch Folge eines ungleichen Mittenabstandes ist. Außerdem wird eine höhere Antriebsleistung erforderlich.

Zu beachten ist weiterhin, daß das Gerät so an den zu reinigenden Gewindebolzen geführt wird, daß Bolzenachse und Geräteachse eine Linie bilden. Oft ist der "Fliehkraft-Effekt" trotz stark beschleunigtem Gerät nicht wirksam, da gelöste Schmutzpartikel und sonstige Reinigungsrückstände zur Schwergängigkeit der lose in ihren Führungsschlitzen sitzenden Bürsten führen.

Bestimmte Gewindeausführungen, wie beispielsweise Feingewinde und konisches Rohr-Außengewinde, lassen sich aber nur dann reinigen, wenn **alle** Bürsten den **gleichen Mittenabstand** haben.

Die Erfindung **geht von der Aufgabe aus**, eine eingangs erwähnte Einrichtung so zu verbessern, daß mit ihr die Reinigungseffizienz verbessert wird, auch wenn verschiedene Drehzahlen der Reinigungseinrichtung gewünscht werden und stark unterschiedliche Durchmesser von Reinigungsgewinden vorliegen, ohne die Standzeit der Bürstenleisten zu reduzieren. Erreicht wird das mit umfänglich orientierten Federn, deren Einstellung **unabhängig von der Drehzahl** des Antriebsorgans und von der **Arbeitslage** des Gerätes ist (Anspruch 1).

Die **Lösungen** konkretisieren sich als
a) Federbein (abgewinkeltes Stück Federstahldraht) gemäß Anspruch 2, Anspruch 3;
b) offene Ringfeder gemäß Anspruch 9;
c) Federblatt aus Bandstahl gemäß Anspruch 2, Anspruch 4.

Zum Einsetzen des mit Federn vorgespannten Bürstenträgers wird eine Spann- und Montagehilfe vorgeschlagen (Anspruch 16). Mit ihr wird erreicht, daß der Einbau und das Wechseln von mehreren am Umfang verteilten Bürstenleisten vereinfacht und beschleunigt wird.

Die Lösung des Anspruchs 1 konkretisiert sich anhand der abhängigen Ansprüche.

Ausführungs**beispiele** werden unter Bezug auf die beigefügten Abbildungen (Figuren) zur Erläuterung und Ergänzung der Erfindung herangezogen.

### (a) Federbein:

Einfachste, preiswerteste und dennoch voll funktionstüchtige Lösung sowohl für das Federelement selbst, als auch insbesondere für seine Anordnung am Bürstenträger [Figur 6].

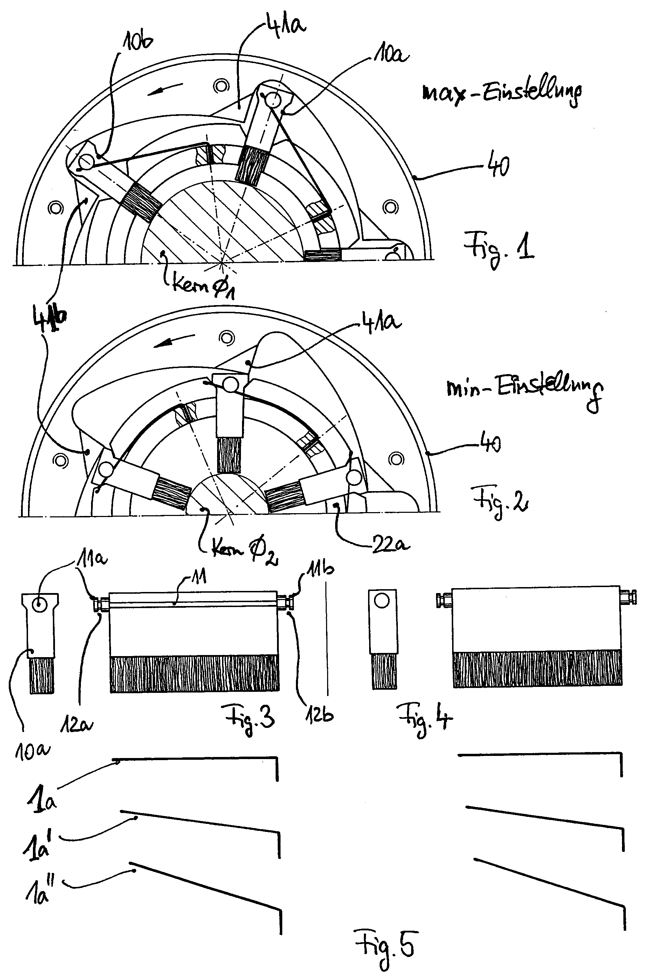

Vorteil:
keine Änderung bisheriger Konstruktion. Verwendung der bisherigen Reinigungsbürsten mit hammerkopfförmigem Querschnitt mit nur geringfügiger Änderung - und damit problemlose Nachrüstung bereits ausgelieferter Reinigungsgeräte. Eventuelle Querschnittsänderung der Bürsten 10b, beispielsweise in einen rechteckigen Querschnitt [Figur 4], haben keinen Einfluß auf die vorgeschlagene Lösung.

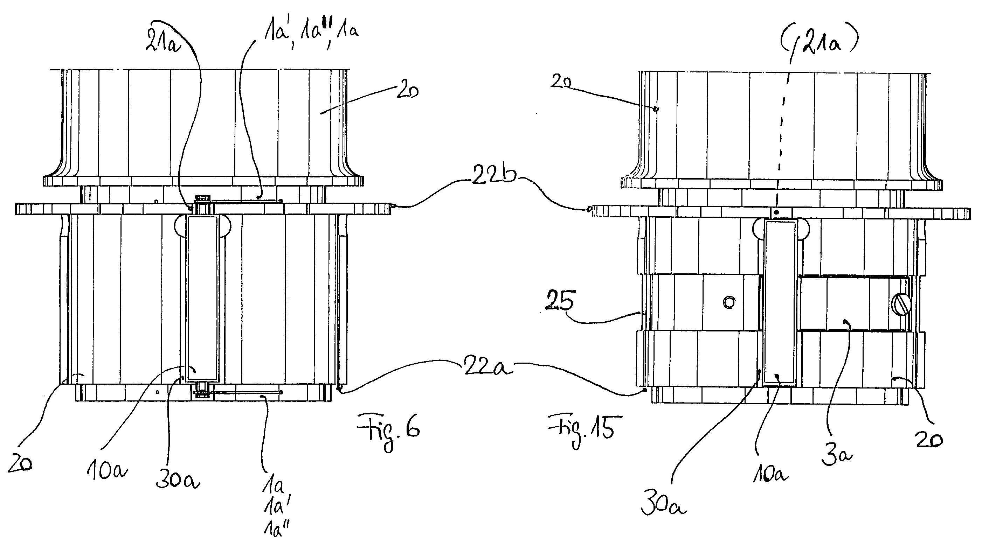

In einem bestimmten Abstand zu jeder Reinigungsbürste 10a,10b, wobei die Anzahl der Bürsten 10a,10b auf dem Bürstenträger 20 keine Rolle spielt, wird zentrisch zum Mittelpunkt des Bürstenträgers 20 ein Loch gebohrt, welches den kürzeren Schenkel des Federbeins 1a,1a',1a'' aufnimmt. Das Federbein selbst ist ein gestreckter Federnstahl-Runddraht oder - Formdraht, der von sogenannter "Meterware" mittels einer Zange abgeschnitten und einseitig abgewinkelt wird. Der lange Federschenkel [Figur 5] legt sich tangential an den vorderen bzw. hinteren Kragen 22 des Bürstenträgers 20 an [Figur 6].

Im entspannten Zustand [Figur 1] hat der lange Federschenkel dann eine solche Position, daß die Reinigungsbürste in den Kurvengrund des Stellnockens gedrückt wird. Die Reinigungsbürste hat beidseitig je einen Auflagestift 11a,11b mit eingedrehter Nut 12a,12b oder einen durchgehenden Stift 11 mit Nuten, in der der Federschenkel liegt [Figur 3] und somit die Bürste nach außen drückt. Jede Reinigungsbürste liegt gewissermaßen auf zwei Federschenkeln 1a,1a' oder 1a'' auf.

Durch Veränderung des Abknickwinkels [Figur 5] kann auf einfachste Weise die Federvorspannung korrigiert werden. Zur Erleichterung der Montage kann die Vorspannung so gewählt werden, daß die Reinigungsbürsten nicht über die Bordscheibe 22a,22b des Bürstenträgers 20 [Figur 6] hinausragen, so daß sich das Außenrohr 40 mit den Stellnocken [Figur 1] leicht über den Bürstenträger 20 schieben läßt. Das Ende des langen Federschenkels kann zu einer kleinen Schlaufe o.ä. abgewinkelt sein, um möglichen Fingerverletzungen beim Bürstenwechsel vorzubeugen. Es kann auch ein Punkt angestaucht oder eine andere Schutzmaßnahme vorgesehen sein. Beim Verdrehen des Außenrohres 40 gegen den Uhrzeigersinn [Figur 2] drücken die Stellnocken die "gefederten" Bürsten in die Stellung "MIN". Hier ist die Federspannung am stärksten und der freie Schenkel legt sich fast vollständig an den Kragen des Bürstenträgers an.

Weiteres Verdrehen bringt die Bürsten in die Stellung "MAX" [Figur 1] wieder zurück (größtmögliches zu reinigendes Gewinde, gerätespezifisch), wobei der freie Federschenkel um seinen Einspannpunkt einen Kreisbogen beschreibt und durch den angeschrägten Rücksprung 41a,41b [Figur 2] sich frei in die Bürstenstellung "MAX" bewegen kann.

Diese Lösung hat folgende Vorteile:
- keine Änderung der bisherigen Konstruktionen
- einfachste Herstellung der Feder
- geringfügige Änderung der Reinigungsbürste
- einfache Korrektur der Federnspannung
- einfaches Auswechseln von Reinigungsbürsten
- simple Montage der Federbeine (kurzen Schenkel in vorgebohrtes Loch stecken)
- Sicherung gegen Herausfallen von Bürsten 10a mit rechteckigem Querschnitt aus den Führungsschlitzen 30a,30b
- optimale und gleichmäßige Federung der Bürsten, da am äußersten Ende die Federkraft wirkt. Besonders von Bedeutung bei **längeren** Bürsten, da ein **Verkanten** der Bürsten auf diese Weise verhindert wird.
- kostengünstige Herstellung

### (b) Offene Ringfeder:

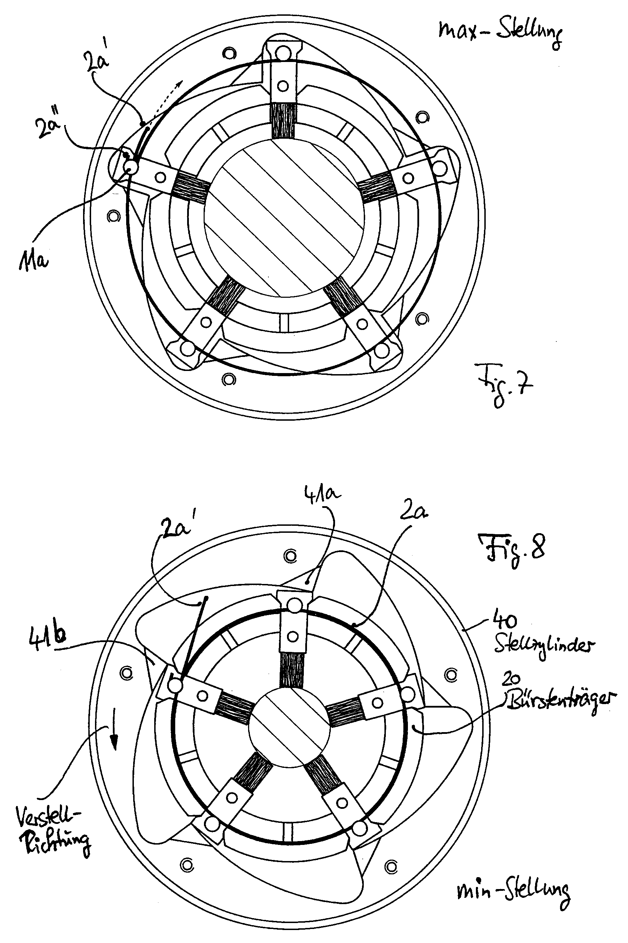

Bei größer-dimensionierten Reinigungsgeräten und Geräten mit erhöhter Anzahl der Reinigungsbürsten 10a,10b am Umfang bietet sich als Federelement eine offene Ringfeder 2a an [Figur 7]. Diese hat an einem Ende eine vorgebogene Formöse 2a'', die sich in die Nut 12a des Auflagestiftes 11a einlegt und den Stift umschließt. Das andere Ende 2a' der Ringfeder (freies Federende) liegt am selben Stift 11a und wird von der eigenen Federvorspannung dagegen gedrückt.

Zwischen den beiden Enden ist der Federstahl-Runddraht oder Federstahl-Formdraht so stark vorgebogen, daß alle Reinigungsbürsten gegen den Kurvengrund (Stellung "MAX") gedrückt werden [Figur 7].

Durch Verdrehen des Außenrohres 40 gegenüber dem feststehenden Bürstenträger 20 wird die "Reinigungsposition" der Bürsten entsprechend verändert, wobei die Ringfeder 2a **gleichmäßig** alle Bürsten gegen die Stellnocken drückt. Die Ringfeder liegt dabei in den eingedrehten Nuten 12a der Auflagenstifte [siehe auch Figur 4 und Figur 5].

Das freie Ende 2a' der Ringfeder ändert je nach Bürstenstellung des Gerätes seine Position und schwenkt um den Anlagepunkt am Auflagestift und verlängert oder verkürzt den freien Schenkel. Gehen die Reinigungsbürsten aus der Stellung "MAX" in die Stellung "MIN" [Figur 7 und Figur 8] wird das freie Federende immer länger, wobei der angeschrägte Rücksprung 41a,41b [Figur 8, siehe auch Figur 2] an den Stellnocken sicherstellt, daß die Ringfeder 2a sich soweit umfänglich zusammenschieben läßt, daß alle konstruktiv vorgegebenen Reinigungspositionen eingestellt werden können.

Die Reinigungsbürsten haben beidseitig Auflagestifte 11a,11b [Figur 4 und Figur 5], und auf der gegenüberliegenden Seite ist eine zweite Ringfeder 2a gleicher Ausführung und gleicher Funktion angeordnet, die zur seitlichen Führung zusätzlich gegen die Bordscheibe 22a,22b des Bürstenträgers 20 anliegt [Figur 6].

Fertigungstechnisch bedingt hat die Ringfeder 2a eine relativ große Vorspannkraft, so daß nach dem Einlegen beider Ringfedern die Bürsten über die Bordscheibe des Bürstenträgers hinausragen.

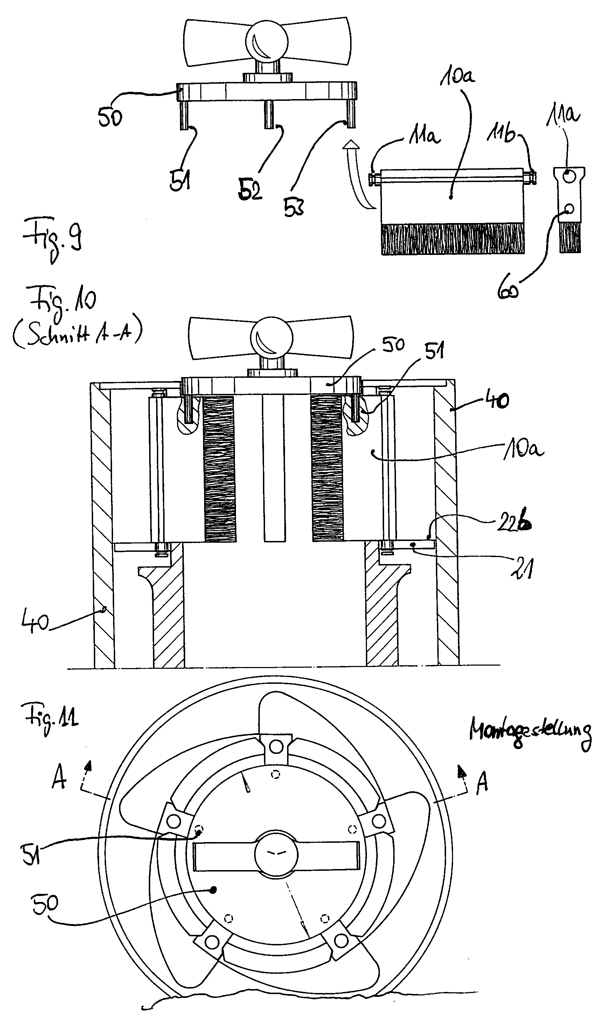

Damit man das Gerät dennoch montieren kann, d.h. den mit Bürsten bestückten Bürstenträger in das Außenrohr schieben kann, dürfen die Bürsten aber nicht über die Bordscheibe 22a,22b hinausragen. Die unter Federspannung stehenden Reinigungsbürsten werden von Hand soweit zusammengedrückt, bis die stirnseitig eingebohrten Sacklöcher 60 [Figur 9] in der Reinigungsöffnung des Bürstenträgers liegen [Figur 10 und Figur 11]. Dann wird eine Montagescheibe 50 [Figur 9] in die Reinigungsöffnung gesetzt, deren Stifte 51,52,53 in die Sacklöcher 60 der Bürstenkörper 10a greifen und den gesamten Satz Reinigungsbürsten in dieser Stellung arretieren. Danach kann der Bürstenträger 20 mit der Montagescheibe 50 zusammen in das Außenrohr 40 geschoben werden. Anschließend wird die Montagescheibe 50 von Hand abgezogen und die wirksame Federspannung drückt die Bürsten nach außen gegen die Stellnocken.

Bei Querschnittsänderung des Bürstenträgers, beispielsweise in rechteckigem Querschnitt, ist die offene Ringfeder 2a ebenfalls zu verwenden. Die Reinigungsbürsten sind einseitig in der Bordscheibe [Figur 6 und Figur 10] in Nuten 30a,30b geführt, so daß selbst bei Federbruch oder sonstiger Fehlfunktion der Federn (Federbein und Ringfeder) die Bürsten gegen Herausfallen gesichert sind.

Vorteile:
- nur zwei Federn pro Reinigungskopf
- optimal wirksame Federkraft, da Federn beidseitig außen spannen
- einfach zu montieren
- keine zzgl. Bohrungen im Bürstenträger
- einfaches Auswechseln der Bürsten
- gut geeignet für Bürstenköpfe mit vielen Reinigungsbürsten
- einfach herzustellen
- verkürzbar und dadurch für mehrere Gerätegrößen verwendbar

### (c) Federblatt aus Bandstahl:

Zur Reduzierung der Baulänge des Reinigungskopfes 20,40 können eine größere Anzahl kürzerer Bürsten, möglicherweise auch mit zwei- oder mehrreihigem Besatz, eingesetzt werden.

Wegen der gewünschten Kompaktausführung, beispielsweise als Reinigungskopf mit separatem Antrieb, wird ein Federblatt 3a,3b aus Bandstahl als Federelement (Anspruch 1) vorgeschlagen, das alle Bürsten 10a,10b gleichmäßig gegen die Stellnocken drückt. Pro Reinigungsbürste ist dann nur noch **ein** Federelement 3a erforderlich, um die einwandfreie Funktion des Gerätes sicherzustellen.

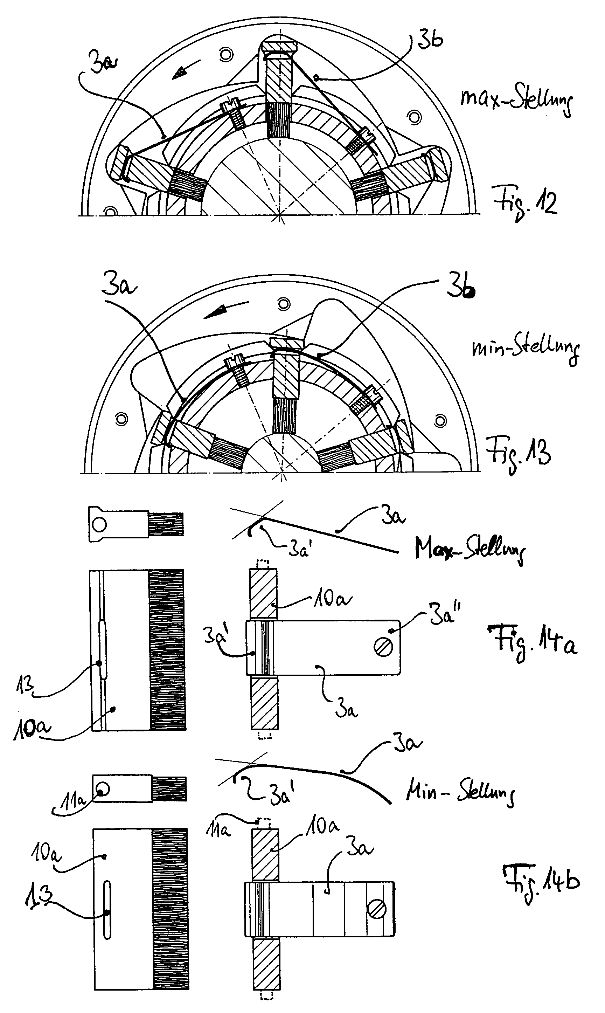

Die Federkraft greift **mittig** in der Bürste an und verschiebt die Bürste in ihrer Führung 30a gleichmäßig nach außen, insbesondere beim Übergang aus der Stellung "MIN" [Figur 13] in Stellung "MAX" [Figur 12]. "MIN" bezeichnet dabei die Reinigungsposition für das kleinstmögliche zu reinigende Gewinde (gerätespezifisch), "MAX" die Position für das größtmögliche zu reinigende Gewinde.

Ebenso gleichmäßig drückt das Federblatt 3a jede einzelne Reinigungsbürste in jeder beliebigen Reinigungsstellung gegen die Stellnocken, so daß immer eine "zentrische" Stellung der Bürsten gegeben ist. Diese besondere Stellung ist für das Funktionieren der Reinigungseinrichtung (siehe unter 1.) vorteilhaft.

Das Federblatt 3a besteht aus einem dünnen, geraden Federbandstahl, der einseitig leicht abgeknickt und, zur Vermeidung von Fingerverletzungen beim Wechseln der Bürsten zuzüglich an seinem Ende nach innen gerollt ist [Figur 14a und 14b]. Die abgeknickte Zone des Federblattes bildet in der Stellung "MAX" eine parallel zum Schlitz im Bürstenkörper stehende Auflagefläche, auf der die Bürste **aufliegt** [Figur 12]. In dieser Stellung kann der Bürstenträger in das Außenrohr nach Wechseln der Bürsten geschoben werden (Montage).

Durch einfaches Abknicken des freien Federendes, insbesondere unmittelbar hinter der Befestigungsschraube, läßt sich auf einfache Weise die Federnspannung verändern. Bei gewünschter stärkerer Vorspannung können die Bürsten (bei Montage) beim Einsetzen in den Bürstenträger dann über den Rand der Bordscheibe 22a,22b hinausragen. Der Bürstenträger kann dann in das Außenrohr geschoben werden, wenn eine Montagehilfe, beispielsweise Montagescheibe 50 nach Figur 9, 10 , 11, verwendet wird.

Das Federblatt 3a,3b sitzt im Grund einer umlaufenden Nut 25 im Bürstenträger 20 und ist mit einer Schraube verschraubt [Figur 15]. Das Befestigungsgewinde ist zentrisch zum Mittelpunkt des Bürstenträgers gebohrt, so daß sich der gerade Schenkel des Federblattes tangential an den Nutgrund 25 anlegt. Das Federblatt hat durch die umlaufende Nut eine beidseitige Führung, die verhindert, daß sich die Bürsten, die im Führungsschlitz durch das abgeknickte Federende geführt werden, während des Reinigungsvorganges axial verschieben können. Außerdem stellt die Führung sicher, daß das gesamte Federsystem funktionstüchtig bleibt, da die einzelne Blattfeder ihre Position nicht ändern kann und zu ihrer Befestigung zudem nur eine Schraube erforderlich ist.

In der Stellung "MIN" (kleinster Bolzengewinde-⌀) schmiegt sich das Federblatt teilweise dem Nutgrund an, wobei sich das abgeknickte Ende 3a' durch den Führungsschlitz 13 im Bürstenkörper 10a leicht nach außen verschiebt, bis das "gerollte" Ende auf dem Nutgrund 25 aufliegt.

Die Bürsten sind einfach auszuwechseln, indem man das Federblatt leicht nach außen drückt, so daß das Federende aus dem Führungsschlitz herausgeht und die Bürste freigibt.

Das Federblatt schnappt dann wieder in seine Ursprungslage zurück, wenn eine neue Bürste eingesetzt ist.

Vorteile:
- nur eine einzige Feder pro Bürste
- einfache Befestigung durch nur eine Schraube
- schnelle Veränderung der Federvorspannung durch Abknicken des freien Federendes unmittelbar hinter der Befestigungsschraube
- preiswerte Herstellung, da unkompliziertes Formteil aus Federbandstahl
- Federkraft wirkt mittig und gleichmäßig
- durch Veränderung der Feder 3a und der Nut 25 (breiter, schmaler) auch anwendbar für längere und schwerere bzw. kürzere und leichtere Reinigungsbürsten
- funktionssicheres Federnsystem, da Federblatt beidseitig durch umlaufende Ringnut 25 geführt ist
- einfache Ausführung der Ringnut
- nur geringfügige Änderung der bisherigen Konstruktion
- Bürstenkörper mit Schlitz 13 oberhalb der eingesetzten Bürstenbüschel

## Patentansprüche

1. Rückstelleinrichtung für leistenförmige Reinigungsbürsten (10a,10b, ...), die in Axialschlitzen (30a) in einem ersten Zylinder (2;"Bürstenträger") geführt sind und die durch Verstellen eines radial beabstandeten, zweiten Zylinders (40; "Stellzylinder") mittels umfänglich verteilter Stellnocken in ihrer Radial-Eingriffsstellung veränderbar sind, **dadurch gekennzeichnet,**
daß jede Bürstenleiste (10a,10b,...) mit einem oder zwei - sich umfänglich erstreckenden - elastischen Elementen ("Federn";1a,1a',1a'';2a,2a';3a,3b) radial in Richtung der Stellnocken, insbesondere nach außen vorgespannt wird.

2. Rückstelleinrichtung nach Anspruch 1, dadurch gekennzeichnet, daß die elastischen Elemente eine Blattfeder (3a) sind.

3. Rückstelleinrichtung nach einem der erwähnten Ansprüche, bei der jedes Federbein (1a,1a',1a'') einen kürzeren und einen deutlich längeren Schenkel hat, insbesondere der kürzere Schenkel und der längere Schenkel einen Winkel von 90° bis 145° einschließen.

4. Rückstelleinrichtung nach Anspruch 2, bei der das Federblatt (3a) deutlich breiter als ein Federbein (1a,1a') ist und aus Bandstahl besteht.

5. Rückstelleinrichtung nach Anspruch 4, bei der jedes Federblatt (3a,3b) in einer umlaufenden Vertiefung (25) im Bürstenträger (20) angeordnet, insbesondere mit einer Schraube einseitig festgelegt ist.

6. Rückstelleinrichtung nach einem der Ansprüche 4 oder 5, bei der das freie Ende (3a') der Blattfeder (3a), das etwa mittig in die Bürstenleiste (10a) eingreift (13), abgeknickt oder eingerollt ist.

7. Rückstelleinrichtung nach Anspruch 3, bei der der kürzere Schenkel umfänglich neben der Bürstenleiste (10a) im Bürstenträger (20) fest angeordnet ist, insbesondere in einer radial gerichteten Bohrung.

8. Rückstelleinrichtung nach einem der erwähnten Ansprüche, bei der
(a) das freie - insbesondere das lange - Ende jedes Federbeins (1a,1a',1a'') abgestumpft ist; und/oder
(b) der die Stellnocken an ihrem Rücksprung zwischen Minimal- und Maximal-Hub eine Schräge (41a,41b) aufweisen, um dem freien Ende (3a') des Federbeins (1a) oder der Blattfeder (3a) eine ungehinderte elastische Rückauslenkung zu erlauben.

9. Rückstelleinrichtung nach Anspruch 1, dadurch gekennzeichnet, daß die elastischen Elemente als zwei Ringfedern (2a,2a') ausgestaltet sind, die alle Bürstenleisten (10a,10b,...) gemeinsam radial nach außen vorspannen.

10. Rückstelleinrichtung nach Anspruch 9, bei der die Ringfeder (2a) offen ist.

11. Rückstelleinrichtung nach Anspruch 10, bei der die Überlappung des Anfangs (2a'') und des Endes (2a') der offenen Ringfeder (2a) so gewählt ist, daß sie gering, im wesentlichen Null, ist, wenn die Bürstenleisten (10a) ihre radial äußerste Stellung einnehmen (Figur 7).

12. Rückstelleinrichtung nach einem der Ansprüche 9 bis 11, bei der die Ringfeder (2a) einends eine Anbringungsöse (2a'') aufweist, mit der sie an einer Stirnseite einer Bürstenleiste (10a) lagefest angeordnet ist.

13. Rückstelleinrichtung nach einem der Ansprüche 9 bis 12, bei der die Ringfeder (2a) in Nuten (12a,12b) an stirnseitigen Anlagezapfen (11a,11b) der Bürstenleisten (10a,10b) anliegt und in Axialrichtung gesichert ist.

14. Rückstelleinrichtung nach einem der Ansprüche 9 bis 13, bei der eine oder beide Ringfedern (2a) zur (weiteren) axialen Fixierung an einem oder zwei umfänglichen Kragen (22a,22b) des Bürstenträgers (20) anliegen.

15. Rückstelleinrichtung nach einem der vorigen Ansprüche, bei der einer oder zwei Anlagezapfen (12a,12b) an der Stirnseite der Bürstenleiste (10a) in einer sich radial erstreckenden Nut (21a,21b) eines Kragens (22a,22b) des Bürstenträgers (20) geführt sind.

16. **Spann- und Montagehilfe** für einen Bürstenträger (20), der mit - mit Federn nach radial außen vorgespannten - Bürstenleisten (10a,10b) bestückt ist, bei der jede Bürstenleiste stirnseitig ein Sackloch (60) aufweist, bestehend aus einer Montagescheibe (50) mit abragenden Paßstiften (51,52,53), die auf einem Kreis angeordnet sind, dessen Durchmesser mit dem Durchmesser korrespondiert, auf dem die Sacklöcher (60) der - von Hand nach radial innen zusammengedrückten - Bürstenleisten (10a,10b,...) liegen, um die Paßstifte (51,52,53) zum temporären Fixieren der Radialposition der Bürstenleisten in sie einsetzen zu können.
